# EUROPEAN PATENT APPLICATION

(11) **EP 4 836 457 A1**
(43) Date of publication of application: **04.11.2026**
(21) Application number: 24912661.6
(22) Date of filing: 20.12.2024
(51) Int. Cl.: H04W 4/08, H04W 4/46, H04W 76/14, H04W 84/20, H04W 92/18

(54) **SYSTEM AND TERMINAL**

(30) Priority: 25.12.2023 JP 2023217635
(71) Applicant: TOYOTA JIDOSHA KABUSHIKI KAISHA, Toyota-Shi, Aichi-Ken 471-8571 (JP)
(72) Inventor: SHAO, Xiao, Toyota-shi, Aichi 471-8571 (JP); FURUSAWA, Toru, Toyota-shi, Aichi 471-8571 (JP); TAKADA, Masaru, Toyota-shi, Aichi 471-8571 (JP); AONO, Kazumi, Toyota-shi, Aichi 471-8571 (JP); OKEDA, Shingo, Toyota-shi, Aichi 471-8571 (JP)
(74) Representative: Simmons & Simmons
(86) International application number: PCT/JP2024/045174
(87) International publication number: WO 2025/142772

(57) **Abstract**

A system that constitutes a wireless communication network, the system comprises a controller comprising at least one processor configured to execute: receiving a request message that requests formation of one group including a plurality of pieces of user equipment (UE) in a predetermined area; and transmitting an instruction message that instructs the plurality of pieces of UE located within the predetermined area to form the group based on the request message.

## Description

### BACKGROUND

### Technical Field

The present disclosure relates to a system and a terminal in a cellular communication network.

### Description of the Related Art

In a cellular communication network, it is assumed to control a vehicle equipped with a mobile communication terminal. Further, conventionally, as a technique of controlling a vehicle, a technique of controlling a column including a plurality of vehicles is known. Concerning this, Patent document 1 discloses a vehicle management apparatus, and the like, that control connection between vehicles included in a column through communication with a lead vehicle of the column.

### [Citation List]

### [Patent document]

[Patent document 1]
Japanese Patent Laid-Open No. 2023-97152

### SUMMARY

An object of the present disclosure is to cause a plurality of pieces of UE to form a group including the UE while designating an area in which the group is to be formed.

One aspect of an embodiment of the present disclosure is a system that constitutes a wireless communication network, the system comprising a controller comprising at least one processor configured to execute:
receiving a request message that requests formation of one group including a plurality of pieces of user equipment (UE) in a predetermined area; and
transmitting an instruction message that instructs the plurality of pieces of UE located within the predetermined area to form the group based on the request message.

Another aspect of an embodiment of the present disclosure is a terminal that operates as user equipment (UE) constituting a wireless communication network, the terminal comprising a controller comprising at least one processor configured to execute:
receiving from a core network, an instruction message that gives an instruction to form one group with a plurality of pieces of the UE including the terminal in a predetermined area;
determining whether or not the terminal is located within the predetermined area; and
in a case where it is determined that the terminal is located within the predetermined area, forming the one group with a plurality of pieces of the UE near the terminal.

Further, another aspect includes a method to be executed by the above-described apparatus, a program for causing a computer to execute the method, or a computer-readable storage medium storing the program in a non-transitory manner.

According to the present disclosure, it is possible to cause a plurality of pieces of UE to form a group including the UE while designating an area in which the group is to be formed.

### BRIEF DESCRIPTION OF THE DRAWINGS

Fig. 1 is a conceptual diagram of processing to be executed by a system according to an embodiment.
Fig. 2 is a view illustrating an example of components of the system according to the embodiment.
Fig. 3A is a view illustrating a configuration example of an information processing apparatus operable as the system according to the embodiment.
Fig. 3B is a view illustrating a configuration example of an apparatus operable as a terminal of the system according to the embodiment.
Fig. 4 is a sequence diagram regarding group formation processing to be executed by a controller of the system according to the embodiment.
Fig. 5 is a flowchart regarding the group formation processing to be executed by the controller of the system according to the embodiment.
Fig. 6A is a conceptual diagram illustrating an example where UE at the center of an area is set as a leader of a group.
Fig. 6B is a conceptual diagram illustrating an example where UE that stays for a longest period is set as the leader of the group.

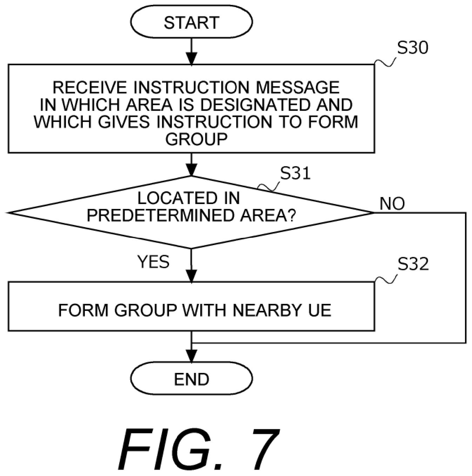

Fig. 7 is a flowchart regarding the group formation processing to be executed by a terminal according to the embodiment.

### DESCRIPTION OF THE EMBODIMENTS

In a case where an emergency vehicle, or the like, passes, it is desired to smoothly provide a space in which the emergency vehicle can travel even at a location like an intersection where a number of vehicles enter from multiple directions. To implement this, it is effective for a plurality of vehicles located in a specific area such as an intersection to operate in cooperation with each other. For example, by a plurality of vehicles performing vehicle-to-vehicle communication to form a group including the plurality of vehicles and operating in cooperation with each other in accordance with an instruction from a leader of the group or certain rules, the plurality of vehicles can make a space for an emergency vehicle to smoothly pass. It is therefore desirable that a system that communicates with the plurality of vehicles can transmit an instruction to cause the plurality of vehicles located in an area to form a group while designating the area.

The present disclosure in its one aspect provides a system that constitutes a wireless communication network, the system comprising a controller comprising at least one processor configured to execute:
receiving a request message that requests formation of one group including a plurality of pieces of user equipment (UE) in a predetermined area; and
transmitting an instruction message that instructs the plurality of pieces of UE located within the predetermined area to form the group based on the request message.

Examples of the wireless communication network include a system utilizing 5G, 4G, LTE, LTE-A, SUPER 3G, IMT-Advanced, NR, and others and a next generation system expanded based on these. Further, other examples of the wireless communication network include a system of IEEE 802.11 (Wi-Fi (registered trademark)), IEEE 802.16 (WiMAX (registered trademark)), IEEE 802.20, UWB, Bluetooth (registered trademark), and others and a next generation system expanded based on these. The wireless communication network may be a system obtained by combining a plurality of systems.

The predetermined area is a spatial range in which one group including a plurality of pieces of UE is to be formed. The predetermined area may be a spatial range in which some or all pieces of the UE located in the area are to form one group.

The request message is a message to be received by the controller from an application function (hereinafter, referred to as an "AF") in a 5G system and requesting formation of one group including a plurality of pieces of UE in the predetermined area. In the request message, a spatial range in which the UE that is to form the group is located is designated.

The instruction message is a message to be transmitted by the controller to the plurality of pieces of UE and giving an instruction to form a group with the plurality of pieces of UE located in the predetermined area. In the instruction message, the controller instructs the UE located in the spatial range designated based on the request message to form a group.

The controller receives from the AF, a request message that requests formation of a group including a plurality of pieces of UE in the predetermined area and transmits to the UE, an instruction message that gives an instruction to form the group including the plurality of pieces of UE in the area designated based on the request message.

By this means, the system according to the present disclosure can instruct the UE to form a group including the plurality of pieces of UE in the predetermined area.

Further, the request message may include area information that is information regarding the predetermined area, and the instruction message may include the area information.

By this means, the system according to the present disclosure can instruct the plurality of pieces of UE to form a group while designating an area based on the request from the AF.

Further, the request message may include period information that is information regarding a period during which the one group is to be formed, and the instruction message may include the period information.

By this means, the system according to the present disclosure can instruct the plurality of pieces of UE to form a group while designating a period based on the request from the AF.

Further, the controller including at least one processor may be configured to execute: selecting a base station that is to be caused to transmit the instruction message to a plurality of pieces of the UE in the predetermined area; and causing the selected base station to transmit the instruction message.

By this means, the system according to the present disclosure can instruct the UE to form a group through an appropriate base station.

Further, the controller including at least one processor may be configured to execute: transmitting the instruction message including information that designates the UE located at the center of the predetermined area as a leader of the one group.

By this means, the system according to the present disclosure can set the UE capable of efficiently communicating with respective pieces of UE constituting a group including the plurality of pieces of UE, as a leader.

Further, the controller including at least one processor may be configured to execute: transmitting the instruction message including information that designates the UE expected to stay for a longest period in the predetermined area among a plurality of pieces of the UE as a leader of the one group.

By this means, the system according to the present disclosure can set the UE capable of stably communicating with respective pieces of UE constituting a group including the plurality of pieces of UE as a leader.

Further, a terminal according to the present disclosure is a terminal that operates as user equipment (UE) constituting a wireless communication network, and includes a controller including at least one processor configured to execute: receiving from the core network, an instruction message that gives an instruction to form one group with a plurality of pieces of the UE including the terminal in a predetermined area; determining whether or not the terminal is located within the predetermined area; and in a case where it is determined that the terminal is located within the predetermined area, forming the one group with a plurality of pieces of the UE near the terminal.

By this means, the terminal according to the present disclosure can provide effects similar to those of the above-described system.

Specific embodiments of the present disclosure will be described below based on the drawings. Hardware configurations, module configurations, functional configurations, and the like, described in the respective embodiments are not intended to limit a technical scope of the disclosure thereto unless otherwise specified. For example, while in the following description, an example where the present disclosure is applied to a 5th generation mobile communication system will be described, the present disclosure may be applied to a 4th generation mobile communication system or mobile communication systems later than the 5th generation. Further, the present disclosure may be applied to mobile communication systems specified by specifications other than 3GPP (registered trademark) or may be applied to an arbitrary wireless communication system or wired communication system other than a mobile communication system.

### (Embodiment)

### <Outline of Processing of System>

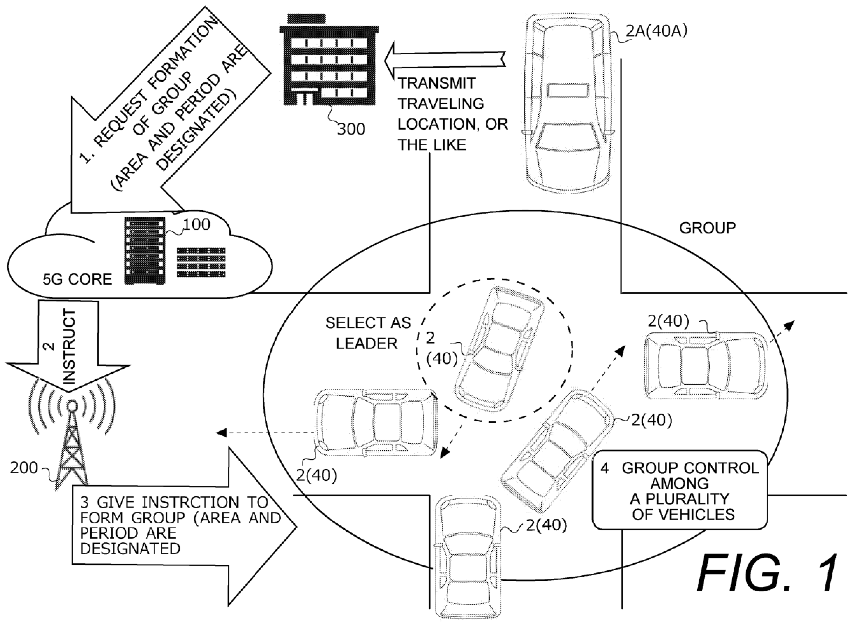

First, outline of processing to be executed by a system according to an embodiment will be described. Fig. 1 is a conceptual diagram of processing to be executed by a system 100 according to the embodiment. Here, the system 100 is typically a 5G core network. The system 100 communicates with UE (vehicle) included in the 5G network to receive or transmit various kinds of instructions. Further, the system 100 communicates with a base station 200 that emits a radio wave that implements the 5G network to transmit various kinds of instructions. Note that the system 100 communicates with the UE (vehicle) via an AF (which will be described later), but the system 100 may directly communicate with the UE (vehicle). In Fig. 1, illustration of the AF is omitted.

A vehicle 40 that is UE 2 is a vehicle equipped with a mobile communication terminal and capable of communicating with a cellular communication network such as a 5G network. A vehicle 40A that is UE 2A is a vehicle equipped with a mobile communication terminal and capable of communicating with a cellular communication network such as a 5G network and is, for example, an emergency vehicle, or the like.

First, the vehicle 40A transmits a current traveling location, or the like, to an emergency call center 300 at the time of dispatch in response to a call. The emergency call center 300 is an example of an AF (which will be described later) in the present disclosure. The emergency call center 300 that has received the traveling location of the vehicle 40A requests the system 100 to form a group including a plurality of pieces of UE 2 while designating a predetermined area and a period determined from the traveling location, or the like, of the vehicle 40A. For example, the emergency call center 300 may request the system 100 to cause the vehicles 40 that are a plurality of pieces of UE 2 in a predetermined area scheduled to be reached by the vehicle 40A to form a group during a period during which the vehicle 40A is to reach the predetermined area. This is performed to cause surrounding vehicles to smoothly give way to the vehicle 40A that is an emergency vehicle during a period during which the vehicle 40A just passes through the area by the surrounding vehicles traveling in cooperation with each other. Note that the emergency call center 300 may request formation of the group including the plurality of vehicles 40 while designating the predetermined area and the period based on a travel route of the vehicle 40A grasped in advance from information regarding a dispatch destination, or the like, without receiving the current location of the vehicle 40A from the vehicle 40A.

Then, the system 100 instructs the base station 200 to instruct the vehicles 40 to form the group including the plurality of vehicles 40 in the designated area during the designated period. The 5G core network may select the base station closest to the designated area and give the instruction.

Then, the base station 200 instructs the corresponding vehicles 40 to form the group including the plurality of vehicles 40 in the designated area during the designated period. For example, the base station 200 instructs the vehicles 40 located in the designated area or the vehicles 40 expected to be located in the designated area during the designated period to form the group by broadcast communication.

Then, the plurality of vehicles 40 that has received the instruction to form the group from the base station 200 forms one group by performing vehicle-to-vehicle communication with each other. The plurality of vehicles 40 that has formed the group travels in cooperation with each other while sharing location information, traveling directions, speeds, and the like, of each other. The plurality of vehicles 40 that has formed the group may travel in accordance with an instruction from one vehicle 40 selected as a leader in the group or may adjust the traveling directions, the speeds, or the like, each time by communicating with the respective vehicles 40 through vehicle-to-vehicle communication.

Note that the system 100 may designate a selection method of a leader in the group when instructing the base station 200 to instruct the vehicles 40 that are the corresponding UE 2 to form the group. The base station 200 transmits the selection method of the leader in the group to the plurality of vehicles 40, and the vehicle 40 determined by the selection method behaves as the leader in the group. For example, the system 100 may give an instruction to select the vehicle 40 located at the center of the predetermined area as the leader.

For example, by the plurality of vehicles 40 that has formed the group respectively moving in directions indicated by dashed arrows as illustrated in Fig. 1, it is possible to solve traffic congestion at the intersection and secure the course of the vehicle 40A that is an emergency vehicle.

In this manner, the system 100 can cause the base station 200 to instruct the plurality of pieces of UE 2 to form the group in the area during the period designated from the emergency call center 300. In other words, the system 100 can implement formation of the group by the plurality of pieces of UE 2 in the predetermined area during the period desired by the AF, the UE 2A, or the like.

### <System Configuration>

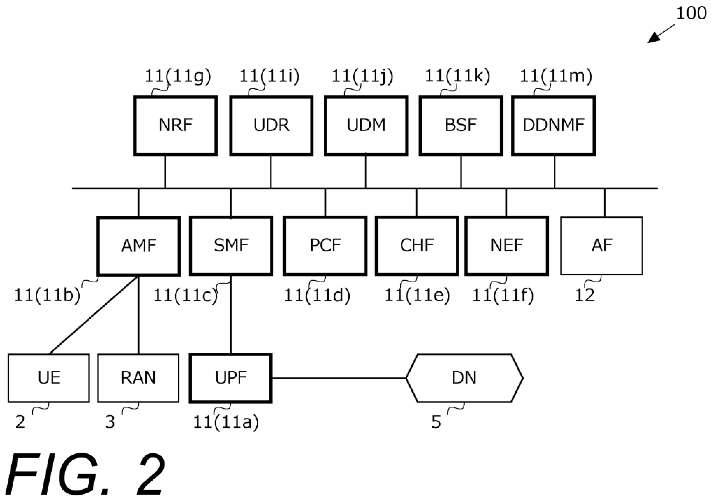

Fig. 2 illustrates components (constituent elements) constituting a 5th generation mobile communication system (5G network). In Fig. 2, the user equipment (UE) 2 is a terminal of a user (subscriber). A radio access network (RAN) 3 is an access network to the 5G core network (5GC). The RAN 3 is constituted with base stations (gNB). The 5G network includes the 5G core network (5GC) and the access network ((R)AN), and the UE 2, a DN 5 and an AF 12 are connected to the 5G network. Each of NFs 11a to 11m is a function implemented by one or more computers (information processing apparatuses) executing a program. However, a single computer may implement any two or more of the NFs 11a to 11m. Each of the NFs 11a to 11m can also be referred to as a network node or a network component. The components (constituent elements) illustrated in Fig. 1 implement the system 100 according to the embodiment.

The 5GC is constituted with an aggregate of components having predetermined functions called network functions (NFs). Fig. 1 illustrates the following as the NFs 11 that constitute the 5GC. Fig. 1 indicates a plurality of elements constituting the NFs 11 with rectangles thicker than other lines.
User plane function (UPF) 11a
Access and mobility management function (AMF) 11b
Session management function (SMF) 11c
Policy control function (PCF) 11d
Charging function (CHF) 11e
Network exposure function (NEF) 11f
Network repository function (NRF) 11g
User data repository (UDR) 11i
Unified data management (UDM) 11j
Binding support function (BSF)
Direct discovery name management function (DDNMF) 11m

The UPF 11a performs routing, transferring, packet inspection, and QoS processing of a user packet (user plane packet to be transmitted/received by the UE 2).

The AMF 11b is a visitor location register of the UE in the 5GC. The AMF 11b accommodates the RAN 3 and performs subscriber authentication control, and location (mobility) management of the UE 2.

The SMF 11c manages a protocol data unit (PDU) session and controls the UPF 11a to implement quality of service (QoS) control and policy control. The PDU session is a virtual communication path for data exchange between the UE 2 and the data network (DN) 5. The DN 5 is a data network (such as the Internet) outside the 5GC.

The PCF 11d performs QoS control, policy control, and charging control under the control of the SMF 11c. In the QoS control, control of quality of communication, such as priority transfer of a packet is performed. In the policy control, communication control such as QoS, whether or not packet transfer can be performed, and charging is performed based on a network or subscriber information. Details of processing of the PCF will be described later.

The CHF 11e plays a role of supporting online and offline charging functions.

The NEF 11e plays a role of mediating communication between an external node and a node in a control plane.

The NRF 11g stores and manages information of the NFs (such as, for example, the AMF, the SMF and the UPF) in the 5GC. In response to an inquiry related to the NF that is desired to be used, the NRF 11g can return a plurality of candidates for the NF to an inquiry source.

The UDR 11i plays a role of managing authentication or permission using subscriber information stored in a subscriber information database.

The UDM 11j holds subscriber related information and provides the subscriber information or acquires, registers deletes, and changes a state of the UE 2.

The BSF 11k plays a role of providing a PDU session and ensuring that a request for the PDU session from the AF reaches the PCF that holds PDU session information. The BSF holds binding information and allows each NF to register, update, delete, and search for the information.

The DDNMF 11m plays a role of processing a network related action necessary for dynamic 5G ProSe Direct Discovery.

The AF 12 is an NF that requests the PCF 11d to execute formation of the group including the plurality of pieces of UE 2 in the predetermined area based on a request for formation of the group received from the UE 2 or voluntarily and provide a group communication service to the UE 2. As an example, the AF 12 acquires a current location of the UE 2 and a route through which the UE 2 is to pass in the future and voluntarily requests the PCF 11d to execute formation of the group including the plurality of pieces of UE 2 in the predetermined area. Further, an application program to be executed by the UE (terminal) may operate as the AF 12.

In the 5GC, there is a case where a plurality of NFs of the same type is prepared. For example, there is a case where the NF 11 is prepared for each data center (facility). Further, there is a case where one NF 11 is shared among the data centers. Still further, there is a case where a plurality of NFs 11 of the same type is constituted in one data center. The number of the data centers, the number of the NFs 11, and a correspondence relationship between the NFs 11 and the data centers can be set as appropriate.

### <Configurations of Information Processing Apparatus and Terminal>

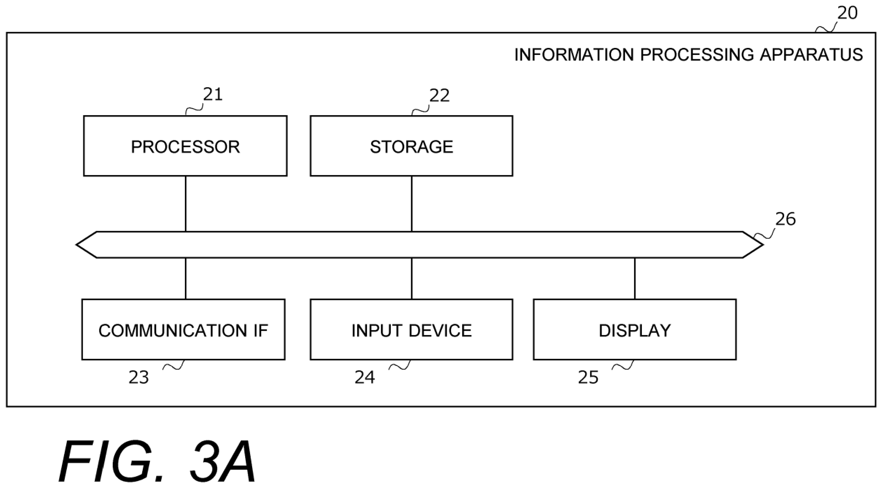

Fig. 3A illustrates a configuration example of an information processing apparatus 20 operable as the system 100 according to the embodiment. In Fig. 3A, the information processing apparatus 20 can be constituted using a dedicated or general-purpose information processing apparatus (computer) such as a personal computer (PC), a workstation (WS) or server machine. Of course, the information processing apparatus 20 may be an aggregate (cloud) of one or more computers.

The information processing apparatus 20 includes a processor 21 as a processor or a controller, a storage 22, a communication interface 23 (communication IF 23), an input device 24, and a display 25, which are connected to each other via a bus 26.

The storage 22 includes a main storage device and an auxiliary storage device. The main storage device is used as at least one of a memory area of a program and data, a program loaded area, a program work area, a communication data buffer area, or the like. The main storage device is constituted with a random access memory (RAM) or a combination of the RAM and a read only memory (ROM). The auxiliary storage device is used as a memory area of data and a program. A non-volatile storage medium is applied as the auxiliary storage device. The non-volatile storage medium is, for example, a hard disk, a solid state drive (SSD), a flash memory, an electrically erasable programmable read-only memory (EEPROM), or the like. Further, the storage 22 can include a drive device of a disk recording medium.

The communication IF 23 is a circuit that performs communication processing. For example, the communication IF 23 is a network interface card (NIC). Further, the communication IF 23 may be a wireless communication circuit that performs wireless communication (such as 5G, wireless LAN (Wi-Fi (registered trademark)) and BLE). Further, the communication IF 23 may be a combination of a circuit that performs wired communication processing and a wireless communication circuit.

The input device 24 includes a key, a button, a pointing device, a touch panel, and the like, and is used to input information. The display 25 is, for example, a liquid crystal display, or the like, and displays information and data.

The processor 21 performs various kinds of processing by executing various kinds of programs stored in the storage 22. By the processor 21 executing the program stored in the storage 22, the information processing apparatus 20 can operate as each of the NFs 11a to 11m and external servers 12a and 12b. The processor 21 is a specific example of a controller of the system 100.

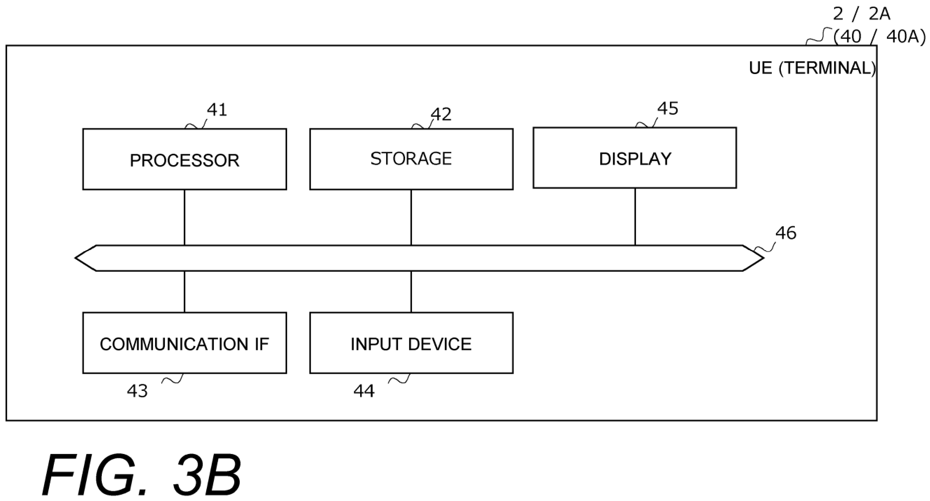

Fig. 3B is a view illustrating a configuration example of the vehicle 40 (40A) operable as the UE 2 (2A). The vehicle 40 or 40A includes a processor 41, a storage 42, a communication interface 43 (communication IF 43), an input device 44, a display 45, and a drive unit 47, which are connected to each other via a bus 46. The processor 41, the storage 42, the communication IF 43, the input device 44, and the display 45 are similar to the processor 21, the storage 22, the communication IF 23, the input device 24, and the display 25. Thus, description thereof will be omitted.

The processors 21 and 41 are, for example, central processing units (CPUs). The CPU is also referred to as a microprocessor unit (MPU). The processors 21 and 41 may have a single processor configuration or a multi-processor configuration. Further, a single physical CPU connected by a single socket may have a multi-core configuration. The processors 21 and 41 may include arithmetic devices having various circuit configurations such as a digital signal processor (DSP) or a graphics processing unit (GPU). Further, the processors 21 and 41 may have a configuration of coordinating with at least one of an integrated circuit (IC), other digital circuits, analog circuits, or the like. The integrated circuit includes an LSI, an application specific integrated circuit (ASIC), a programmable logic device (PLD), and the like. The PLD includes, for example, a field-programmable gate array (FPGA). The processors 21 and 41 include what is called, for example, a micro controller (MCU), a system-on-a-chip (SoC), a system LSI, a chip set, and the like.

The drive unit 47 is means for causing the vehicle 40 or 40A to travel. The drive unit 47 can include, for example, a motor and an inverter for driving wheels, a brake, and a steering mechanism. The drive unit 47 may operate by power supplied from a battery.

### <System Operation>

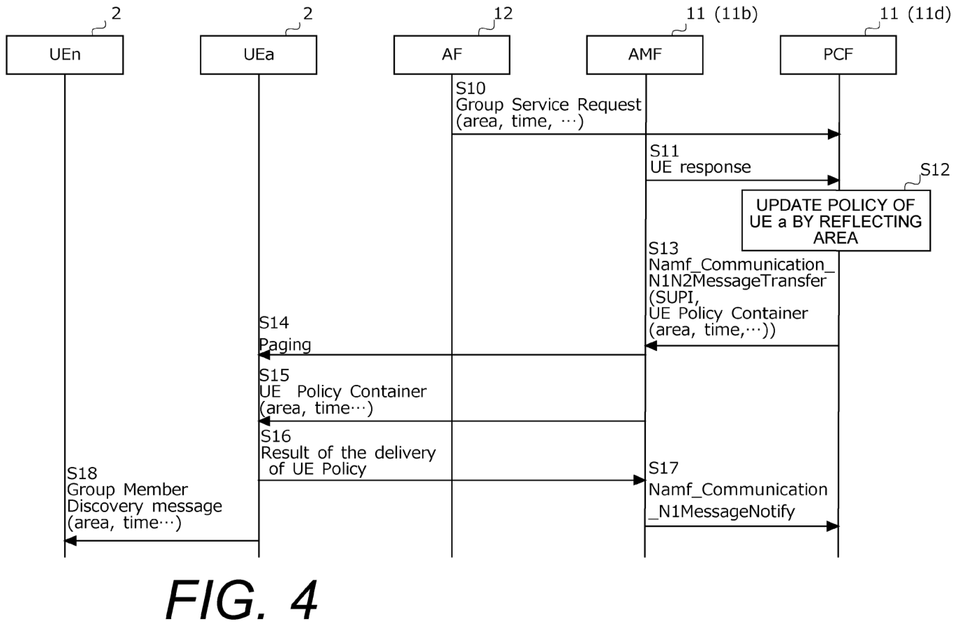

Fig. 4 is a sequence diagram regarding group formation processing to be executed by the controller of the system 100 according to the embodiment. Note that the sequence diagram indicated here is an example, and may include processing other than the indicated processing, or part of the indicated processing may be omitted or the indicated execution order of the processing may be changed.

In the present operation example, UE a corresponds to the vehicle 40 equipped with a mobile communication terminal that utilizes the present service, and the AMF 11b, the PCF 11d, and the AF 12 correspond to applications that provide the present service. UE n operates by receiving a message from the UE a to which a service is provided from the present application. The UE a and UE n are specific examples of the UE 2.

In step S10, the AF 12 transmits to the PCF 11d, a request message for group formation in which a predetermined area and a period are designated. The request message includes parameters designating an area and a period in and during which the AF 12 desires to cause the plurality of pieces of UE n to form the group. The parameter designating the area in which the group is desired to be formed is a specific example of area information, and the parameter designating the period during which the group is desired to be formed is a specific example of period information.

The parameter for specifying the area in which the group is desired to be formed can express, for example, location information representing a point that becomes an origination for defining a spatial range of the area, information indicating a range represented based on the origination, and the like. The range represented based on the origination may be represented by an angle from a horizontal line or a vertical line on a horizontal plane that passes through the origination or may be represented by a direction, an azimuth angle, or the like, viewed from the origination. Note that here, the spatial range may be represented as a two-dimensional plane or may be represented as a three-dimensional space. The area in which the group is desired to be formed is a specific example of the predetermined area.

Further, the request message may include information regarding a period during which group formation is to be executed. The information regarding the period during which group formation is to be executed may be indicated with a time length having a fixed width. For example, in the request message, it may be designated to execute group formation for a period from h1:m1:s1 to h2:m2:s2, or it may be designated to execute group formation for m3 minutes after s3 seconds from a current time point. Note that the UE 2 may directly transmit the request message to the PCF 11d not through the AF 12.

In step S11, the AMF 11b transmits to the PCF 11d, responses from the UE acquired so far. The AMF 11b may regularly transmit to the PCF 11d, the latest response from the UE or may transmit to the PCF 11d, the latest response from the UE in response to an inquiry from the PCF 11d.

In step S12, the PCF 11d updates policy of the UE by reflecting the area designated in the request message received from the AF 12. The PCF 11d updates the policy of the UE a so that the UE a forms a group with a plurality of pieces of UE n in the designated area. Note that the PCF 11d may designate information regarding a period during which the UE a is to execute group formation in the updated policy. The information regarding the period may be determined based on the request message received from the AF 12. Note that the PCF 11d may designate the area itself designated in the request message in the updated policy of the UE or may designate a predetermined area obtained by adjusting the area designated in the request message in the updated policy of the UE.

In step S13, the PCF 11d transmits a Namf_Communication_N1N2MessageTransfer message to the AMF 11b. The message includes SUPI and UE Policy Container as parameters. The UE Policy Container may further include a parameter designating the area. Further, the UE Policy Container may also include information regarding a period during which the UE a is to execute group formation as a parameter.

In step S14, the AMF 11b requests the UE a to perform paging processing. The AMF 11b may request the UE a to perform paging processing via the RAN 3.

Then, in step S15, the AMF 11b transmits UE Policy Container to the UE a. Here, the UE Policy Container includes a parameter that designates an area in which group formation is to be executed. Further, the UE Policy Container may include information regarding a period during which group formation is to be executed as a parameter. Here, the UE Policy Container to be transmitted is a specific example of the instruction message.

Note that the AMF 11b may select the base station 200 that is to be caused to transmit the UE Policy Container to the UE a and cause the base station 200 to transmit the UE Policy Container to the UE a. The AMF 11b may cause the base station 200 closest to the predetermined area designated by the parameter included in the UE Policy Container to transmit the UE Policy Container to one or a plurality of pieces of UE 2 in the area.

In step S16, the UE a returns a result of receipt of the UE Policy Container to the AMF 11b. The UE a may transmit ACK when the UE a correctly receives the information. Further, when the UE a cannot correctly receive the information due to a packet loss, or the like, the UE a may transmit NAK instead and request retransmission of the information.

In step S17, the AMF 11b transmits a Namf_Communication_N1MessageNotify message to the PCF 11d. The message is information indicating a result of receipt of the UE Policy Container by the UE a.

In step S18, the UE a instructs one or a plurality of pieces of UE n to form a group including the UE a. The UE a instructs one or a plurality of pieces of UE n to form a group in the area designated in the UE Policy Container received in step S15. For example, the UE a may transmit instructions to form a group to the UE n located in the designated area at the same time.

Further, the UE a may instruct one or a plurality of pieces of UE n to form a group during the period designated in the UE Policy Container received in step S15. For example, the UE a may transmit instructions to form a group to one or a plurality of pieces of UE n expected to be located in the designated area during the designated period. Here, the designated period may be represented by a time length having a fixed width.

In step 18, the one or the plurality of pieces of UE n that has received the instruction to form a group from the UE a forms a group in the designated area, or the like.

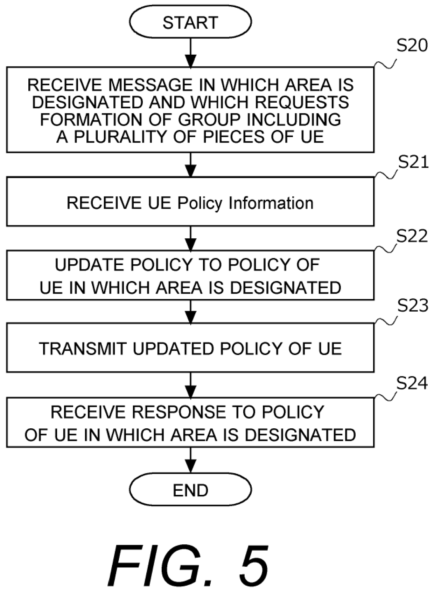

Then, processing to be executed by the controller of the system 100 according to the embodiment will be described. Fig. 5 is a flowchart regarding group formation processing to be executed by the controller of the system according to the embodiment. Specifically, the processing described in Fig. 5 may be executed by the processor 41 of the information processing apparatus 20 operable as the system 100.

First, in step S20, the PCF 11d receives a request message in which an area is designated and which requests formation of a group including a plurality of pieces of UE 2. The PCF 11d may receive the request message from the AF 12 or may directly receive the request message from the UE 2. In the request message, the PCF 11d is requested to instruct the corresponding UE to form a group including the plurality of pieces of UE 2 in the predetermined area. The request message may include information regarding a period during which group formation is to be executed in the area designated by the UE 2.

Then, in step S21, the PCF 11d receives UE Policy Information from the AMF 11b. The PCF 11d may regularly receive the latest UE Policy Information from the AMF 11b or may acquire the latest UE Policy Information by requesting the latest UE Policy information to the AMF 11b by itself. Note that the AMF 11b may acquire the UE Policy Information by regularly communicating with the UE 2.

Then, in step S22, the PCF 11d updates the policy of the UE 2 determined by the PCF 11d to policy that gives an instruction to form a group while designating the area in which the group is requested to be formed in the request message. Specifically, the PCF 11d updates the policy so that the UE 2 forms a group with one or a plurality of pieces of UE 2 near the UE 2 in the predetermined area. Note that the PCF 11d may designate in the policy, the period during which the UE 2 forms a group with one or more pieces of UE 2 near the UE 2 in the predetermined area. Here, the period during which the group is to be formed may be represented by a time length having a fixed width.

Then, in step S23, the PCF 11d transmits the policy of the UE 2 updated in step S22 to the AMF 11b. The AMF 11b transmits the updated policy of the UE 2 to the UE 2. Here, the UE 2 receives an instruction to form the group with the plurality of pieces of UE 2 in the predetermined area. As described above, the UE 2 may also receive an instruction regarding the period during which the group is to be formed with the plurality of pieces of UE 2 in the predetermined area.

Then, in step S24, the PCF 11d receives from the AMF 11b, information regarding a response from the UE 2 that has received the updated policy. The AMF 11b receives a response indicating that the updated policy has been received from the UE 2 and transmits the response to the PCF 11d.

By this means, the system 100 can cause the corresponding UE to form a group including a plurality of pieces of UE while designating the predetermined area.

### <Selection of Leader of Group>

After the plurality of pieces of UE 2 forms the group, the plurality of pieces of UE 2 performs communication in the group to operate in cooperation with each other to some extent. In this event, the UE 2 that manages other pieces of UE 2 as a group is required in the group. Thus, the system 100 selects a leader of the group when instructing the UE 2 to form the group.

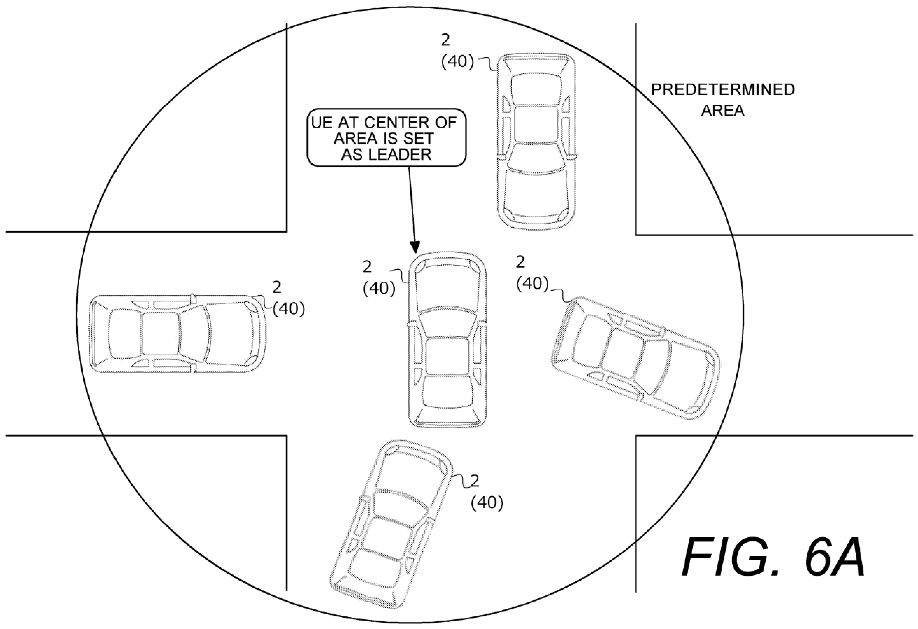

Fig. 6A is a conceptual diagram illustrating an example where the UE at the center of the area is set as the leader. As a first selection method of the leader of the group, the system 100 may select the UE 2 located near the center of the predetermined area designated in the UE Policy Container as the leader. The system 100 may specify the UE 2 located in the predetermined area, acquire location information of the respective pieces of UE 2 from the specified UE 2, and select the UE 2 closest to the center of the predetermined area as the leader. In a case where the period during which the group is to be formed in the predetermined area is designated, the system 100 may select the UE 2 expected to be located at a location closest to the center of the predetermined area during the period as the leader in advance.

By the first selection method of the leader of the group, the system 100 can set the UE 2 that can most efficiently communicate with the respective pieces of UE 2 constituting the group as the leader.

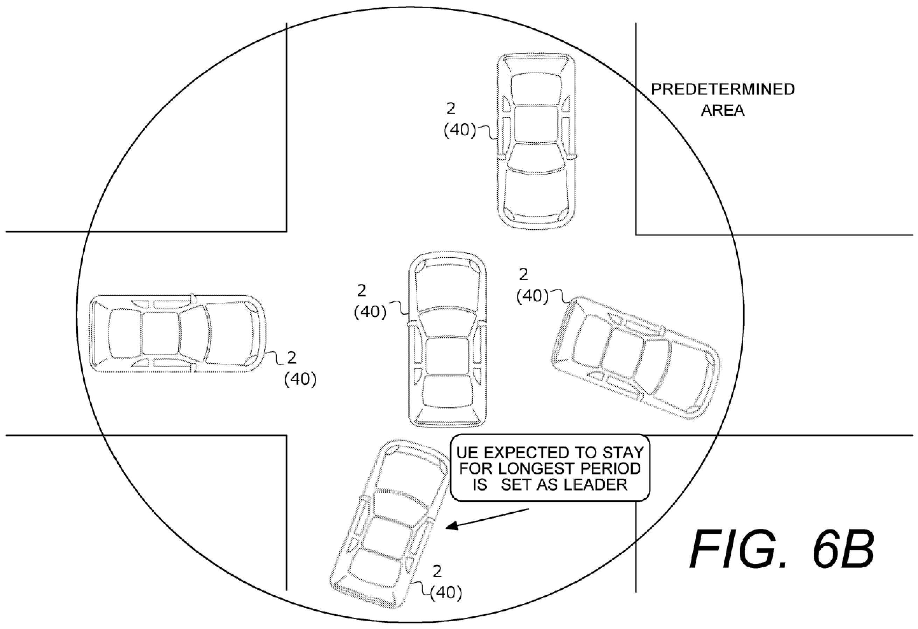

Fig. 6B is a conceptual diagram illustrating an example where the UE that stays for a longest period is set as the leader of the group. As a second selection method of the leader of the group, the system 100 may select the UE 2 expected to stay for a longest period in the predetermined area designated in the UE Policy Container as the leader. The system 100 may specify the UE 2 located in the predetermined area, acquire location information of the respective pieces of UE 2 from the specified UE 2, and select the UE 2 located near an end portion on an opposite side in a traveling direction of the group to be formed among the UE 2 located in the predetermined area as the leader. In a case where the traveling direction of the group is not uniquely determined as illustrated in the example of Fig. 6B, the leader may be determined as described above based on a traveling direction of the UE 2 located at the center of the group.

In a case where the period during which the group is to be formed in the predetermined area is designated, the system 100 may select in advance the UE 2 expected to be located near the end portion on the opposite side in the traveling direction of the group to be formed in the predetermined area during the period as the leader. By the second selection method of the leader of the group, the system 100 can set the UE 2 capable of most stably communicating with the respective pieces of UE 2 constituting the group as the leader.

Note that the PCF 11d may adjust the area designated in the request message and designate the predetermined area again in the updated policy. In this case, a case can be considered where the area designated in the request message is partially different from the area designated in the updated policy. In this case, in the first selection method and the second selection method, the predetermined area may be the area designated in the request message or the area designated in the updated policy.

### <Operation of UE>

Operation of the UE 2 that executes group formation in response to an instruction to form a group from the system 100 will be described next.

First, the UE 2 receives from the AF 12, an instruction message that gives an instruction to form a group while designating the predetermined area. In other words, the UE 2 receives from the system 100, an instruction to form a group with one or a plurality of pieces of other UE 2 near the UE 2 in the predetermined area. The UE 2 may directly receive the instruction message from the PCF 11d or may receive the instruction message from the base station 200 that has received the instruction from the system 100. Further, the instruction message may include information designating a period during which the group is to be formed in the predetermined area.

Then, the UE 2 determines whether or not the UE 2 is located in the predetermined area. The UE 2 determines whether or not the UE 2 is located within the predetermined area designated in the instruction message as an area in which the group is to be formed with other UE 2 near the UE 2. In a case where the UE 2 determines that the UE 2 is located in the predetermined area, a positive determination result is obtained in the present step.

In a case where a positive determination result is obtained in the present step, the processing transitions to step S32.

In a case where a negative determination result is obtained in the present step, the processing ends.

In a case where the processing transitions to step S32, the UE 2 forms a group with the other UE 2 near the UE 2. The group is formed by the UE 2 transmitting messages for forming the group to the other UE 2 near the UE 2 at the same time and the other UE 2 that has received the messages responding to the UE 2. The UE 2 may designate UE 2 that becomes a leader in the messages for forming the group to the other UE 2. After the group is formed, the plurality of pieces of UE 2 constituting the group including the UE 2 communicates with each other and operates in cooperation with each other to some extent.

### <Other Modifications>

The above-described embodiment is merely an example, and the present disclosure can be changed and implemented as appropriate within a range not deviating from the gist of the present disclosure.

While in the above-described embodiment, data is provided to the user terminal using a Request/Response scheme, data may be provided using a Subscribe/Notify scheme.

The present disclosure can also be implemented by one or more processors of a computer to which a computer program implementing the functions described in the above-described embodiment is supplied, reading and executing the program. Such a computer program may be provided to the computer using a non-transitory computer-readable storage medium that can be connected to a system bus of the computer or may be provided to the computer via a network. The non-transitory computer-readable storage medium includes, for example, an arbitrary type of disk such as a magnetic disk (such as a Floppy (registered trademark) disk and a hard disk drive (HDD)), and an optical disk (such as a CD-ROM, a DVD disk, and a Blu-ray disk), a read only memory (ROM), a random access memory (RAM), an EPROM, an EEPROM, a magnetic card, a flash memory, an optical card, an arbitrary type of medium appropriate for storing an electronic command.

## Claims

1. A system that constitutes a wireless communication network, the system comprising a controller comprising at least one processor configured to execute:
receiving a request message that requests formation of one group including a plurality of pieces of user equipment (UE) in a predetermined area; and
transmitting an instruction message that instructs the plurality of pieces of UE located within the predetermined area to form the group based on the request message.

2. The system according to claim 1, wherein
the request message includes area information that is information regarding the predetermined area, and
the instruction message includes the area information.

3. The system according to claim 1, wherein
the request message includes period information that is information regarding a period during which the one group is to be formed, and
the instruction message includes the period information.

4. The system according to any one of claims 1 to 3, wherein
the controller comprising at least one processor is configured to execute:
selecting a base station that is to be caused to transmit the instruction message to the UE in the predetermined area; and
causing the selected base station to transmit the instruction message.

5. The system according to any one of claims 1 to 3, wherein the controller comprising at least one processor is configured to execute:
transmitting the instruction message including information that designates the UE located at the center of the predetermined area as a leader of the one group.

6. The system according to any one of claims 1 to 3, wherein the controller comprising at least one processor is configured to execute:
transmitting the instruction information including information that designates the UE expected to stay for a longest period in the predetermined area among a plurality of pieces of the UE as a leader of the one group.

7. A terminal that operates as user equipment (UE) constituting a wireless communication network, the terminal comprising a controller comprising at least one processor configured to execute:
receiving from a core network, an instruction message that gives an instruction to form one group with a plurality of pieces of the UE including the terminal in a predetermined area;
determining whether or not the terminal is located within the predetermined area; and
in a case where it is determined that the terminal is located within the predetermined area, forming the one group with a plurality of pieces of the UE near the terminal.
